# EUROPÄISCHE PATENTSCHRIFT

(11) **EP 2 639 011 B1**
(45) Veröffentlichungstag und Bekanntmachung des Hinweises auf die Patenterteilung: **13.05.2015**
(21) Anmeldenummer: 13159093.7
(22) Anmeldetag: 13.03.2013
(51) Int. Cl.: B23Q 11/08, B23Q 11/12

(54) **Werkzeugmaschine zur Bearbeitung eines Werkstücks**
Tool machine for processing a workpiece
Machine-outil destinée au traitement d'une pièce usinée

(30) Priorität: 13.03.2012 AT 500782012
(43) Veröffentlichungstag der Anmeldung: 18.09.2013
(73) Patentinhaber: WFL Millturn Technologies GmbH & Co. KG, 4030 Linz (AT)
(72) Erfinder: Maringer, Herbert, 4642 Sattledt (AT)
(74) Vertreter: Jell, Friedrich

(56) Entgegenhaltungen:
- DE-U1-202012 008 812
- GB-A- 1 073 939
- GB-A- 2 159 737
- SU-A2- 1 404 236

## Beschreibung

Die Erfindung betrifft eine Werkzeugmaschine zur Bearbeitung eines Werkstücks mit einem Gestell, mit einem Arbeitsraum, mit wenigstens einer den Arbeitsraum mindestens bereichsweise begrenzenden Teleskopwand, die wenigstens zwischen zwei ihrer Wandteile eine Linearführung, insbesondere eine Lineargleitführung, aufweist, und mit einer am Gestell befestigten Schmiereinrichtung, die mindestens eine und gegenüber dem Gestell bewegliche Schmierstoffleitung zum Führen von Schmierstoff aufweist.

Um die Wandteile einer Teleskopwand auch mittig stabilisiert führen zu können, ist es aus dem Stand der Technik bekannt (CH667612A5, DE1245226B), eine Linearführung zwischen diesen beiden Wandteilen vorzusehen, die führungsunterstützend zu den endseitig vorgesehenen Führungslagern der Teleskopwand wirken. Eine Lineargleitführung wird als Linearführung beispielsweise vorgeschlagen. Im Betrieb kann sich die Notwendigkeit einer Schmierung dieser Lineargleitführung mit Schmiermittel ergeben, was vom Bedienpersonal nach Bedarf oder Erfordernissen manuell erledigt wird. Eine automatische, aktive Schmierung solch einer Lineargleitführung kann einen vergleichsweise hohen konstruktiven Aufwand erfordern, zumal solch eine Schmiereinrichtung zum einen Schmierstoff über die Breite der Teleskopwand zur Lineargleitführung zu transportieren hat und andererseits gerade dieser Bereich der Teleskopwand meist frei von Konstruktionselementen bleiben sollte, um den Arbeitsraum der Werkzeugmaschine nicht zu beschränken. Zudem sind aus dem Stand der Technik passiv geschmierte Teleskopwände bekannt (DE10123580A1, JP11033873A).

Die Erfindung hat sich daher die Aufgabe gestellt, ausgehend vom eingangs geschilderten Stand der Technik eine Teleskopwand einer Werkzeugmaschine in seiner Wartungsfreundlichkeit und in weiterer Folge in seiner Standfestigkeit ohne erheblichen konstruktiven Mehraufwand zu verbessern.

Die Erfindung löst die gestellte Aufgabe dadurch, dass die Schmierstoffleitung eine auf wenigstens einen Wandteil gerichtete Schmierstofföffnung zum Aufbringen von Schmierstoff oberhalb der Linearführung aufweist und dass die Schmiereinrichtung wenigstens bereichsweise mindestens ein Wandteil zur Führung des von der Schmiereinrichtung auf das Wandteil aufgebrachten Schmierstoffs in Richtung der Linearführung umfasst.

Weist die Schmierstoffleitung eine auf wenigstens einen Wandteil gerichtete Schmierstofföffnung zum Aufbringen von Schmierstoff oberhalb der Linearführung auf, kann dort austretendes Schmiermittel zur Schmierung der Linearführung herangezogen werden, wenn die Schmiereinrichtung bereichsweise mindestens ein Wandteil zur Führung des von der Schmiereinrichtung auf das Wandteil aufgebrachten Schmierstoffs in Richtung der Linearführung zwischen den beiden Wandteilen umfasst. Damit kann unter anderem die Schmierstoffleitung bereits vor der Linearführung enden, wodurch nicht nur die konstruktive Einfachheit hinsichtlich der Schmiereinrichtung genutzt, sondern auch der Arbeitsraum von zusätzlichen Konstruktionsteilen einer Schmiereinrichtung frei gehalten werden kann. Dies im Wesentlichen dadurch, dass durch Ausnutzung der Führungseigenschaften der Wandteile hinsichtlich des aufgetragenen Schmierstoffs, die Konstruktion der Schmiereinrichtung mit ihren Schmierstoffleitungen im Randbereich der Teleskopwand endet und somit nicht zwingend in den Arbeitsraum vorragt. Auch eine automatische Schmierung der Linearführung zwischen den Wandteilen kann auf diese Weise ermöglicht werden. Somit kann bei sichergestellter ausreichende Schmierung eine Verringerung des Personalaufwands hinsichtlich der Wartung sichergestellt werden, was in weiterer Folge nicht nur zu einer kostengünstigen, sondern auch eine standfesten Teleskopwand führen kann. Es wird der Vollständigkeit halber erwähnt, dass eine Schmierstoffleitung selbstverständlich aus verschiedensten Schmierstoffleitungsteilen ausgebildet sein kann. Eine Schmierstoffleitung kann beispielsweise starre Leitungsrohre mit anschließenden Rohrstutzen zur Ausbildung einer Schmierstofföffnung umfassen.

Die Führung des Schmierstoffs mit Hilfe die Teleskopwand kann verbessert werden, wenn die Schmierstofföffnung auf den Zwischenraum zwischen den beiden Wandteilen gerichtet ist, wobei beide Wandteile gemeinsam eine Führung für den eingebrachten Schmierstoff in Richtung der Linearführung ausbilden. Eventuell von einer Teleskopwand wegspritzendes Schmiermittel kann so von der gegenüberliegenden anderen Teleskopwand aufgefangen und in Richtung der zu schmierenden Linearführung geleitet werden.

Einfache Konstruktionsverhältnisse können sich ergeben, wenn die Schmierstoffleitung in den Zwischenraum zwischen den beiden Wandteilen einragt. Zusätzlich kann auf diese Weise vergleichsweise einfach sichergestellt werden, dass selbst bei schwankenden Druckverhältnissen in der Schmierstoffleitung der Linearführung Schmierstoff sicher zugeführt werden kann, ohne dabei auch größere Verluste an Schmierstoff in Kauf nehmen zu müssen.

Die Schmierstofföffnung kann auch auf der gegenüber dem Arbeitsraum rückseitigen Teleskopwandseite angeordnet sein, um den Arbeitsraum weitgehend frei von Schmierstoffleitungen zu halten und zudem um eine eventuelle Kontamination eines im Arbeitsraum vorgesehenen Werkstücks mit Schmiermittel zu vermeiden.

Sind zwischen den Wandteilen mehrere untereinander angeordnete Linearführungen vorgesehen, die zur gemeinsamen Schmierung über das Wandteil mit der Schmiereinrichtung verbunden sind, kann der Konstruktionsaufwand für eine automatische Schmierung der Linearführungen auch bei vergleichsweise breiten Teleskopwänden niedrig gehalten werden. Außerdem kann damit überschüssiges Schmiermittel der einen Linearführung zur nächsten darunterliegenden Linearführung übergleitet und weiter genutzt werden, wodurch eine äußerst effektive automatische Schmierung der Linearführungen erreicht werden kann.

Die Position der Schmierstofföffnung der Schmierstoffleitung gegenüber einer Teleskopwand kann auf einfache Weise sichergestellt werden, wenn die Schmiereinrichtung am Gestell und über wenigstens eine gegenüber dem Gestell bewegliche Schmierstoffleitung an einem Wandteil zu dessen Mitführung befestigt ist. Durch das passive Mitführen der Schmierstoffleitung durch die Teleskopwand kann also auf aktive Bewegungselemente an der Schmiereinrichtung verzichtet werden, wodurch einfache Konstruktionsverhältnisse sichergestellt werden können.

Weist die Schmierstoffleitung starre und zueinander über Schwenklager bewegliche Leitungsrohre auf, kann unter anderem die Standfestigkeit der Schmiereinrichtung verbessert werden.

Die automatisch zu schmierenden Linearführungen können auf konstruktiv einfache Weise mit einer Schmierstoffleitung verbunden werden, wenn die Schmiereinrichtung je eine Schmierstofföffnung für die jeweils zwischen den Teleskopwänden vorgesehene Linearführung bzw. vorgesehenen Linearführungen aufweist.

Weist die als Lineargleitführung ausgebildete Linearführung zwischen seinen Führungselementen einen Gleitspalt auf, kann dieser Gleitspalt als Öffnung zum Schmiermitteleintrag genutzt werden. Außerdem kann dieser Gleitspalt auch zum Schmiermittelaustrag verwendet werden, um überschüssiges Schmiermittel eventuell darunter liegenden Lineargleitführung zur Verfügung zu stellen.

Vereinfachte Konstruktionsverhältnisse für eine Lineargleitführung können sich hinsichtlich der Linearführung ergeben, indem das eine u-förmige Führungselement an einem Wandteil und das andere, leistenförmige und mit dem schienenartigen Führungsteil mit Gleitspiel im Eingriff stehende Führungselement am anderen Wandteil befestigt ist.

In den Figuren ist beispielsweise der Erfindungsgegenstand anhand eines Ausführungsbeispiels dargestellt. Es zeigen
- Fig.: 1 eine dreidimensionale Teilansicht auf eine aufgeschobene Teleskopwand einer teilweise dargestellten Werkzeugmaschine,

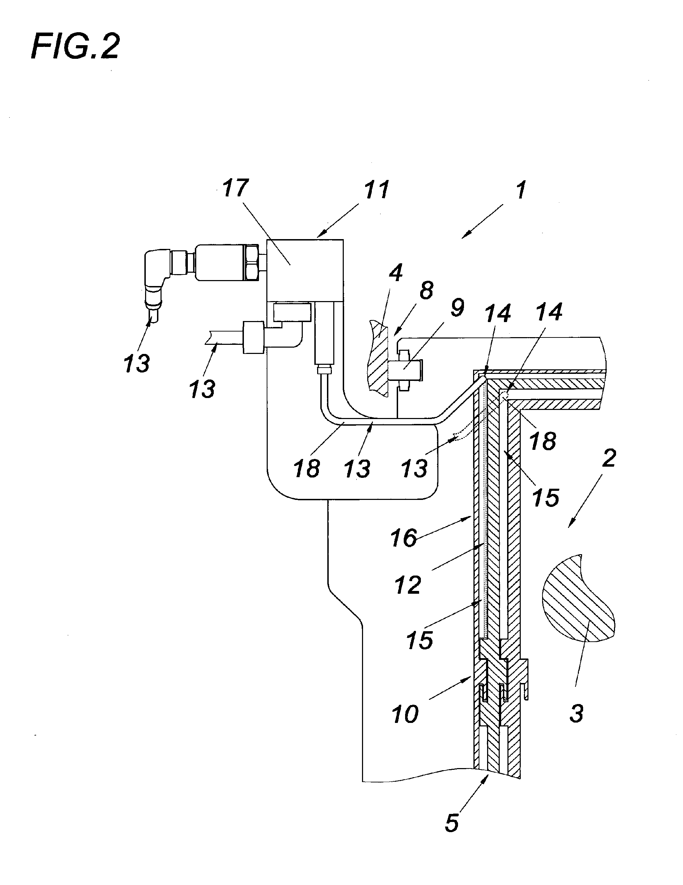

- Fig. 2: eine Seitenansicht in Schnittdarstellung der zusammengeschobenen Teleskopwand nach Fig. 1,
- Fig. 3: eine Detailansicht der Fig. 2,
- Fig. 4: eine Draufsicht auf die Schmierstofföffnung der Schmierleitung und
- Fig. 5: eine Seitenansicht mit einer Darstellung von mehreren Wandteilen.

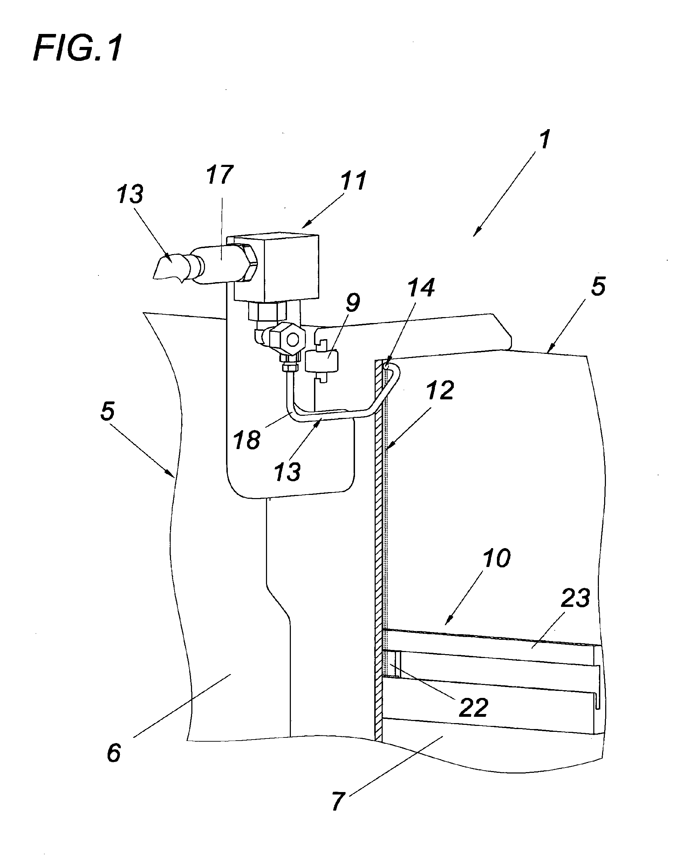

Die nach Fig. 1 teilweise dargestellte Werkzeugmaschine 1 dient zur Bearbeitung eines in einem Arbeitsraum 2 vorgesehenen Werkstücks 3 und weist ein Gestell 4 auf, das die diversen Baugruppen der Werkzeugmaschine 1 trägt. Solch eine Baugruppe kann beispielsweise auch eine Teleskopwand 5 umfassen, die zur wenigstens teilweisen Begrenzung des Arbeitsraums 2 dient. Die Teleskopwand 5 weist mehrere teleskopartig ineinander schiebbare Wandteile 6, 7 auf, die über endseitig vorgesehene Führungslager 8, von denen beispielsweise die obere Linearwälzführung 9 der Fig. 1 entnommen werden kann, am Gestell 4 gelagert sind. Die Wandteile 6, 7 sind auch über eine vorgesehene Linearführung 10 miteinander verbunden, die nur zwischen diesen Wandteilen 6, 7 vorgesehen ist. Außerdem weist die Werkzeugmaschine 1 eine Schmiereinrichtung 11 auf, die Schmierstoff 12 zu Schmierzwecken in einer Schmierstoffleitung 13 führt. Erfindungsgemäß erfolgt nun eine aktive Schmierung der Linearführung 10 durch die Schmiereinrichtung 11 mithilfe besonders einfacher konstruktiver Maßnahmen. Dies wird dadurch erreicht, dass die Schmierstoffleitung 13 eine auf wenigstens ein Wandteil 6, 7 gerichtete Schmierstofföffnung 14 aufweist, um Schmierstoff 12 aus der Schmierstoffleitung 13 auszutragen, oberhalb der Linearführung 10 auf ein Wandteil 6, 7 aufzubringen und diesen Schmierstoff 12 in Richtung der Linearführung 10 durch Ausnutzung der Schwerkraft zu führen. Erfindungsgemäß umfasst daher die Schmiereinrichtung 11 mindestens ein Wandteil 6, 7 zur Führung des von der Schmiereinrichtung 11 auf das Wandteil 6, 7 aufgebrachten Schmierstoffs 12 in Richtung der Linearführung 10. Durch Nutzung wenigstens eines Wandteils 6, 7 zur Schmierstoffführung kann der Konstruktionsaufwand der Schmiereinrichtung 11 im oberen Bereich der Teleskopwand 5 außerdem verringert bzw. niedrig gehalten werden.

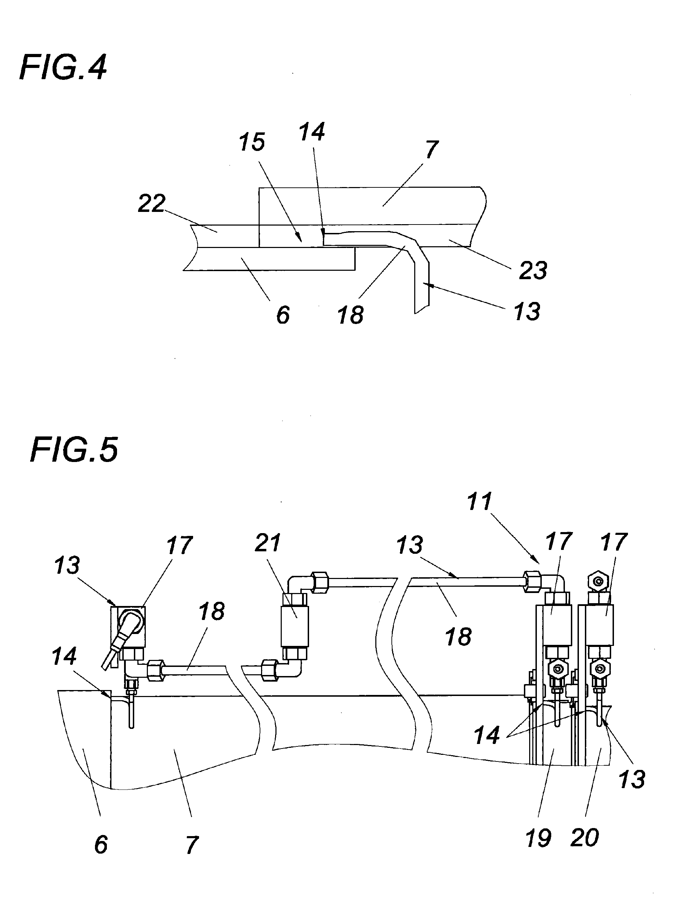

Die Schmierstofföffnung 14 ist auf den Zwischenraum 15 zwischen den beiden Wandteilen 6, 7 gerichtet, wie dies insbesondere in Fig. 4 erkannt werden kann. Damit können beide Wandteile 6, 7 gemeinsam eine Führung für den dort eingebrachten Schmierstoff 12 ausbilden, wodurch sich eine verlustfreie aktive Schmierung der Linearführung 10 ergibt.

Um den Platzbedarf der Komponenten der Schmiereinrichtung und durch diese verursachte eventuelle Nachteile im Arbeitsbereich gering zu halten, ist die Schmierstofföffnung 14 auf der gegenüber dem Arbeitsraum 2 rückseitigen Teleskopwandseite 16 angeordnet. Außerdem kann damit die Gefahr vermindert werden, dass Schmierstoff eventuell auf das Werkstück 3 trifft und dessen Bearbeitung nachteilig beeinflusst.

Konstruktiv einfach ist die Schmiereinrichtung 11 einerseits am Gestell 4 und andererseits, da die Schmierstoffleitung 13 gegenüber dem Gestell beweglich gelagert ist, auch mit seiner Schmierstoffleitung 13 am Wandteil 6, 7 befestigt. Damit kann die Schmierstoffleitung mit der Teleskopwand 5 mitgeführt werden. Diese Beweglichkeit wird auf einfache Weise durch Schwenklager 17 zwischen starren Leitungsrohren 18 geschaffen.

Wie in Fig. 5 zu erkennen, ist für jede Linearführung 10 zwischen den diesbezüglichen Wandteilen 6, 7 bzw. 7, 19 bzw. 19, 20 je eine Schmierstofföffnung 14 an der Schmierstoffleitung 13 vorgesehen. Die Schmierstoffleitung 13 ist an jedem Wandteil 6, 7, 19, 20 befestigt. Die Beweglichkeit der Teleskopwand 5 wird dadurch nicht eingeschränkt, da die bewegliche Schmierstoffleitung 13 über Schwenklager 17, 21 den Bewegungen der Wandteile 6, 7, 19, 20 folgen kann.

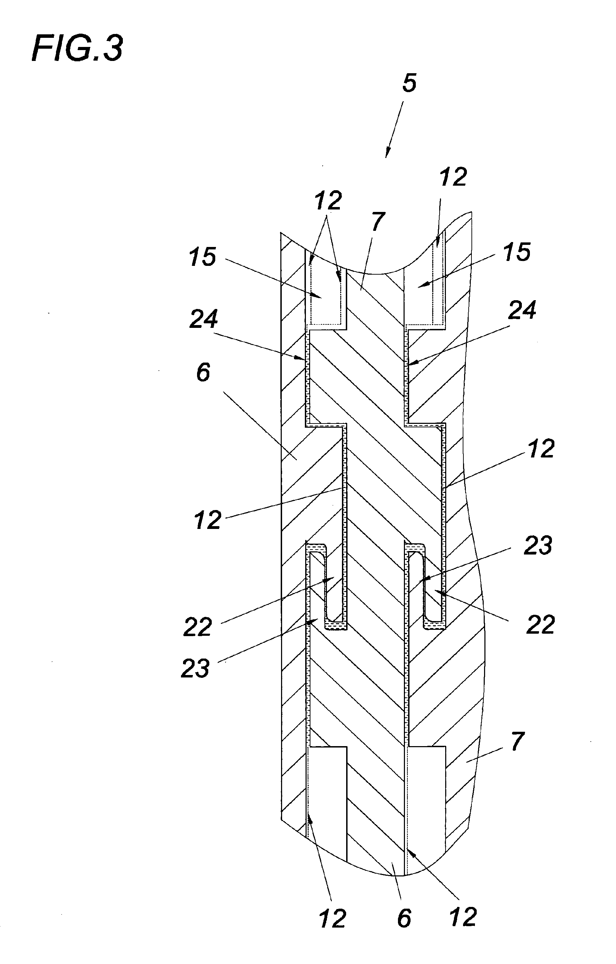

Wie Fig. 3 entnommen werden kann, ist die Linearführung 10 als Lineargleitführung ausgebildet. Schmiermittel 12 wird in die Lineargleitführung einbracht, indem dafür ein zwischen seinen beiden Führungselementen 22, 23 vorgesehener Gleitspalt 24 genützt wird. Die beiden Führungselemente 22, 23 sind je an einem Wandteil 6, 7 befestigt. Das Führungselement 23 ist u-förmig ausgebildet, in das das andere schienenartige Führungselement 22 eingreift.

## Patentansprüche

1. Werkzeugmaschine zur Bearbeitung eines Werkstücks (3) mit einem Arbeitsraum (2), mit wenigstens einer den Arbeitsraum (2) mindestens bereichsweise begrenzenden Teleskopwand (5), die wenigstens zwischen zwei ihrer Wandteile (6, 7) mindestens eine Linearführung (10), insbesondere Lineargleitführung, aufweist, und mit einer Schmiereinrichtung (11), die mindestens eine Schmierstoffleitung (13) zum Führen von Schmierstoff (12) aufweist, **dadurch gekennzeichnet, dass** die Schmierstoffleitung (13) eine auf wenigstens einen Wandteil (6, 7) gerichtete Schmierstofföffnung (14) zum Aufbringen von Schmierstoff (12) oberhalb der Linearführung (10) aufweist und dass die Schmiereinrichtung (11) wenigstens bereichsweise mindestens ein Wandteil (6 und/oder 7) zur Führung des von der Schmiereinrichtung (11) auf das Wandteil (6 und/oder 7) aufgebrachten Schmierstoffs (12) in Richtung der Linearführung (10) umfasst.

2. Werkzeugmaschine nach Anspruch 1, **dadurch gekennzeichnet, dass** die Schmierstofföffnung (14) auf den Zwischenraum (15) zwischen den beiden Wandteilen (6, 7) gerichtet ist, wobei beide Wandteile (6, 7) gemeinsam eine Führung für den eingebrachten Schmierstoff (12) in Richtung der Linearführung (10) ausbilden.

3. Werkzeugmaschine nach Anspruch 2, **dadurch gekennzeichnet, dass** die Schmierstofföffnung (14) auf der gegenüber dem Arbeitsraum (2) rückseitigen Teleskopwandseite (16) angeordnet ist.

4. Werkzeugmaschine nach Anspruch 1, 2 oder 3, **dadurch gekennzeichnet, dass** zwischen den Wandteilen (6, 7) mehrere untereinander angeordnete Linearführungen (10) vorgesehen sind, die zur gemeinsamen Schmierung über das Wandteil (6, und/oder 7) mit der Schmiereinrichtung (11) verbunden sind.

5. Werkzeugmaschine nach einem der Ansprüche 1 bis 4, **dadurch gekennzeichnet, dass** die Schmiereinrichtung (11) am Gestell (4) und über wenigstens eine gegenüber dem Gestell (4) bewegliche Schmierstoffleitung (13) an einem Wandteil (6 bzw. 7) zu dessen Mitführung befestigt ist.

6. Werkzeugmaschine nach Anspruch 5, **dadurch gekennzeichnet, dass** die Schmierstoffleitung (13) starre und zueinander über Schwenklager (17) bewegliche Leitungsrohre (18) aufweist.

7. Werkzeugmaschine nach einem der Ansprüche 1 bis 6, **dadurch gekennzeichnet, dass** die Schmiereinrichtung (11) je eine Schmierstofföffnung (14) für die jeweils zwischen den Teleskopwänden (6, 7) vorgesehene Linearführung (10) bzw. vorgesehenen Linearführungen (10) aufweist.

8. Werkzeugmaschine nach einem der Ansprüche 1 bis 7, **dadurch gekennzeichnet, dass** die als Lineargleitführung ausgebildete Linearführung (10) zwischen seinen Führungselementen (22, 23) einen Gleitspalt (24) zum Schmiermitteleintrag aufweist.

9. Werkzeugmaschine nach Anspruch 8, **dadurch gekennzeichnet, dass** das eine u-förmige Führungselement (23) an einem Wandteil (7) und das andere, leistenförmige und mit dem u-förmigen Führungsteil (23) mit Gleitspiel (24) im Eingriff stehende Führungselement (22) am anderen Wandteil (6) befestigt ist.

## Claims

1. A machine tool for machining a workpiece (3), comprising a working space (2), at least one telescopic wall (5) which delimits the working space (2) at least in zones and which has at least one linear guide (10), more particularly a linear sliding guide, at least between two of its wall parts (6, 7), and comprising a lubricating device (11) which has at least one lubricant line (13) for conveying lubricant (12), **characterized in that** the lubricant line (13) has a lubricant opening (14) directed towards at least one wall part (6, 7) for applying lubricant (12) above the linear guide (10), and the lubricating device (11) comprises at least one wall part (6 and/or 7) at least in zones for guiding the lubricant (12) in the direction of the linear guide (10), said lubricant being applied by the lubricating device (11) to the wall part (6 and/or 7).

2. A machine tool according to claim 1, **characterized in that** the lubricant opening (14) is directed towards the intermediate space (15) between the two wall parts (6, 7), wherein both wall parts (6, 7) jointly form a guide for the introduced lubricant (12) in the direction of the linear guide (10).

3. A machine tool according to claim 2, **characterized in that** the lubricant opening (14) is arranged on the back telescopic wall side (16) with respect to the working space (2).

4. A machine tool according to claim 1, 2 or 3, **characterized in that** a number of linear guides (10) arranged beneath one another are provided between the wall parts (6, 7), which linear guides (10) are connected to the lubricating device (11) via the wall part (6, and/or 7) for common lubrication.

5. A machine tool according to one of the claims 1 to 4, **characterized in that** the lubricating device (11) is fastened to the frame (4) and, via at least one lubricant line (13) movable in relation to the frame (4), to a wall part (6 or 7) for its entrainment.

6. A machine tool according to claim 5, **characterized in that** the lubricant line (13) has rigid conduit pipes (18) and such which are mutually movable via pivot bearings (17).

7. A machine tool according to one of the claims 1 to 6, **characterized in that** the lubricating device (11) has one respective lubricant opening (14) for the linear guide (10) or linear guides respectively provided between the telescopic walls (6, 7).

8. A machine tool according to one of the claims 1 to 7, **characterized in that** the linear guide (10) arranged as a linear sliding guide has a sliding gap (24) between its guide elements (22, 23) for the introduction of lubricant.

9. A machine tool according to claim 8, **characterized in that** a U-shaped guide element (23) is fastened to a wall part (7) and the other strip-like guide element (22), which is in engagement with the U-shaped guide part (23) with sliding play (24), is fastened to the other wall part (6).

## Revendications

1. Machine-outil pour l'usinage d'une pièce (3) avec un espace de travail (2), avec au moins une paroi télescopique (5) délimitant au moins par zones l'espace de travail (2), qui présente au moins entre deux de ses parties de paroi (6, 7) au moins un guidage linéaire (10), en particulier un guidage linéaire coulissant, et avec un dispositif de lubrification (11) qui comporte au moins une conduite de lubrifiant (13) pour amener du lubrifiant (12), **caractérisée en ce que** la conduite de lubrifiant (13) comporte une ouverture de lubrification (14) orientée vers au moins une partie de paroi (6, 7) pour déposer du lubrifiant (12) au-dessus du guidage linéaire (10) et **en ce que** le dispositif de lubrification (11) comprend au moins par zones au moins une partie de paroi (6 et/ou 7) pour guider le lubrifiant (12) déposé par le dispositif de lubrification (11) sur la partie de paroi (6 et/ou 7) en direction du guidage linéaire (10).

2. Machine-outil selon la revendication 1, **caractérisée en ce que** l'ouverture de lubrification (14) est orientée vers l'espace intermédiaire (15) entre les deux parties de paroi (6, 7), lesquelles deux parties de paroi (6, 7) forment ensemble un guidage pour le lubrifiant (12) amené en direction du guidage linéaire (10).

3. Machine-outil selon la revendication 2, **caractérisée en ce que** l'ouverture de lubrification (14) est disposée sur le côté de la paroi télescopique (16) situé sur l'arrière par rapport à l'espace de travail (2).

4. Machine-outil selon la revendication 1, 2 ou 3, **caractérisée en ce qu'**il est prévu entre les parties de paroi (6, 7) plusieurs guides linéaires (10) disposés les uns sous les autres, qui sont reliés au dispositif de lubrification (11) en vue d'une lubrification commune par l'intermédiaire de la partie de paroi (6 et/ou 7).

5. Machine-outil selon l'une des revendications 1 à 4, **caractérisée en ce que** le dispositif de lubrification (11) est fixé sur le bâti (4) et, par l'intermédiaire d'au moins une conduite de lubrifiant (13) mobile par rapport au bâti (4), sur une partie de paroi (6 ou 7) en vue de son guidage entraîné.

6. Machine-outil selon la revendication 5, **caractérisée en ce que** la conduite de lubrifiant (13) présente des tuyaux de conduite (18) rigides et mobiles les uns par rapport aux autres à l'aide de paliers pivotants (17).

7. Machine-outil selon l'une des revendications 1 à 6, **caractérisée en ce que** le dispositif de lubrification (11) présente une ouverture de lubrification (14) pour le guidage linéaire (10) ou chacun des guidages linéaires (10) prévus entre les parois télescopique (6, 7).

8. Machine-outil selon l'une des revendications 1 à 7, **caractérisée en ce que** le guidage linéaire (10) conçu comme un guidage linéaire coulissant présente entre ses éléments de guidage (22, 23) une fente de glissement (24) pour l'introduction de lubrifiant.

9. Machine-outil selon la revendication 8, **caractérisée en ce qu'**un élément de guidage en forme de U (23) est fixé sur une partie de paroi (7) et l'autre élément de guidage (22) en forme de bande et en prise avec un jeu coulissant (24) avec l'élément de guidage en forme de U (23) est fixé sur l'autre partie de paroi (6).
